**Europäisches Patentamt**

**European Patent Office**

**Office européen des brevets**

(19)

(11) Publication number : **0 395 399 B1**

(12)

# EUROPEAN PATENT SPECIFICATION

(45) Date of publication of patent specification :
29.06.94 Bulletin 94/26

(21) Application number : **90304501.1**

(22) Date of filing : **26.04.90**

(51) Int. Cl.⁵ : **C04B 35/00,** C04B 38/00,
**H01M 8/12**

(54) **Method of manufacturing conductive porous ceramic tube.**

(30) Priority : **28.04.89 JP 110813/89**

(43) Date of publication of application :
**31.10.90 Bulletin 90/44**

(45) Publication of the grant of the patent :
**29.06.94 Bulletin 94/26**

(84) Designated Contracting States :
**BE DE FR GB**

(56) References cited :
EP-A- 0 143 325
EP-A- 0 194 374
EP-A- 0 286 360

(73) Proprietor : **NGK INSULATORS, LTD.**
**2-56, Suda-cho, Mizuho-ku**
**Nagoya City Aichi Pref. (JP)**

(72) Inventor : **Yamada, Hirotake**
**66 Kawanayama-Cho,**
**1-Chome,**
**Showa-Ku**
**Nagoya City, Aichi Pref. (JP)**

(74) Representative : **Paget, Hugh Charles Edward**
**et al**
**MEWBURN ELLIS**
**York House**
**23 Kingsway**
**London WC2B 6HP (GB)**

EP 0 395 399 B1

Jouve, 18, rue Saint-Denis, 75001 PARIS

## Description

The present invention relates to a method of manufacturing a conductive porous ceramic tube.

A porous ceramic tube having electrical conductivity made according to the invention is particularly useful as a component of a solid oxide fuel cell (hereinafter referred to as "SOFC").

The solid oxide fuel cell has recently attracted attention as an extremely favorable generator device having characteristics that power generating efficiency is high, fuel can be diversified such as naphtha, natural gas, methanol, coal reformed gas and the like, and pollution is low.

In this solid oxide fuel cell, a thin film electrode and an electrolyte as main components have no self-supporting strength, and are therefore formed on a porous support by spray coating, slurry coating and the like.

In case of forming an electrode and an electrolyte on a porous support as described above, however, there is a problem of reduction of output due to gas diffusion resistance of the support, and the whole construction is complicated.

Therefore, if a porous electrode itself can be used as a support instead of an electrode provided on a porous support, it is possible to simplify the whole construction, to reduce the manufacturing process, to keep the cost down, and to improve output by eliminating any loss caused by gas diffusion resistance.

However, the known porous electrode cannot obtain sufficient strength by itself and is not suitable as a structural support material.

EP-A-286360 discloses a self-supporting elongated tubular electrode for an SOFC, which is made of $LaMnO_3$ doped with Sr.

An object of the invention is to provide a method of manufacturing a conductive porous ceramic tube which is stronger than before, is usable as an electrode and a support of an electrolyte, and is excellent as a structural material.

The method of the invention is set out in claim 1. The synthesis of $La_{1-x}Sr_xMnO_3$ is at a temperature of not less than 1000°C.

For a better understanding of the invention, reference is made to the accompanying drawings, in which:

Figs. 1, 2 and 3 are graphs showing relations between each manufacturing parameter and diametral ring compression strength, respectively; and

Fig. 4 is an outline drawing for explaining a method of measuring diametral ring compression strength.

First, when firing a mixture of La or La compound, Mn or Mn compound and Sr or Sr compound and synthesizing $La_{1-x}Sr_xMnO_3$ (where, $0<x\leqq0.5$), the firing temperature is 1000-1400°C. When manufacturing a conductive porous ceramic tube having a predetermined porosity by suitably setting a particle diameter of $La_{1-x}Sr_xMnO_3$, an addition amount of a pore-forming agent and a firing temperature of a molded tube, the strength of said porous ceramic tube is influenced by the synthesizing temperature (1000-1400°C) of $La_{1-x}Sr_xMnO_3$. When $La_{1-x}Sr_xMnO_3$ synthesized at a low temperature region close to 1000°C is used, said porous ceramic tube is improved in strength. It means that the more $La_{1-x}Sr_xMnO_3$ is synthesized at a low temperature, the better the sinterability. Therefore, if $La_{1-x}Sr_xMnO_3$ synthesized at a temperature beyond 1400°C is used, it is impossible to obtain the above porous ceramic tube having sufficient strength. Moreover, if the temperature is not more than 1000°C, $La_{1-x}Sr_xMnO_3$ may not be synthesized.

The synthetic reaction temperature of this material $La_{1-x}Sr_xMnO_3$ is more preferably 1000-1200°C.

Moreover, when grinding $La_{1-x}Sr_xMnO_3$, it is important that the mean particle diameter of the powder is made 2 to 10 μm.

That is, at the time of grinding, uniformity of pore distribution of said porous ceramic tube can be maintained when the powder is as finely divided as possible, and the strength of said porous ceramic tube can finally be made stronger. However, when the mean particle diameter is made less than 2 μm, said porous ceramic tube becomes low in porosity and a predetermined porosity of more than 25% cannot be obtained. Even if an addition amount of a pore-forming agent is increased, pore distribution of said porous ceramic tube tends to be non-uniform, and if the firing temperature of the molded tube is lowered, said porous ceramic tube is increased in porosity, but insufficient in strength. Moreover, when the mean particle diameter exceeds 10 μm, the strength becomes insufficient.

It is further important to add 1-8 parts by weight of a pore-forming agent represented e.g. by acrylic powder, carbon powder and the like which disappears at a low temperature to 100 parts by weight of said powder $La_{1-x}Sr_xMnO_3$

When the addition amount of a pore-forming agent is not more than 1 part by weight, said porous ceramic tube obtained is highly densified. Therefore, in order to obtain said porous ceramic tube having a predetermined porosity, it is necessary to fire a molded tube at a low temperature with not less than 1 part by weight of a pore-forming agent; otherwise, a predetermined strength cannot be obtained. On the other hand, when the addition amount of a pore-forming agent exceeds 8 parts by weight, pore distribution of said porous ceramic tube obtained becomes non-uniform, and mechanical strength is lowered. Therefore, the addition amount of a pore-forming agent should be 1-8 parts by weight.

It is further important to fire the molded tube at a temperature of 1300-1600°C. If this firing temperature is not more than 1300°C, sintering is not completely finished, and the strength is lowered. When a molded tube is fired at a higher temperature than 1600°C, the obtained porous ceramic tube becomes too dense so as not to obtain a predetermined permeability. Even if the addition amount of a pore-forming agent is increased, pore distribution of a porous ceramic tube obtained is liable to be uneven, and such porous ceramic tube is not suitably used for a fuel cell electrode. This firing temperature is preferably 1350-1450°C.

Moreover, when using this porous ceramic tube as an SOFC air electrode, it is necessary that the coefficient of thermal expansion of the porous ceramic tube should approximate to that of the solid electrolyte within the allowable range. Therefore, $x \leqq 0.5$ is required.

First of all, an example of manufacturing an air electrode tube for SOFC according to the invention is described.

### Example 1

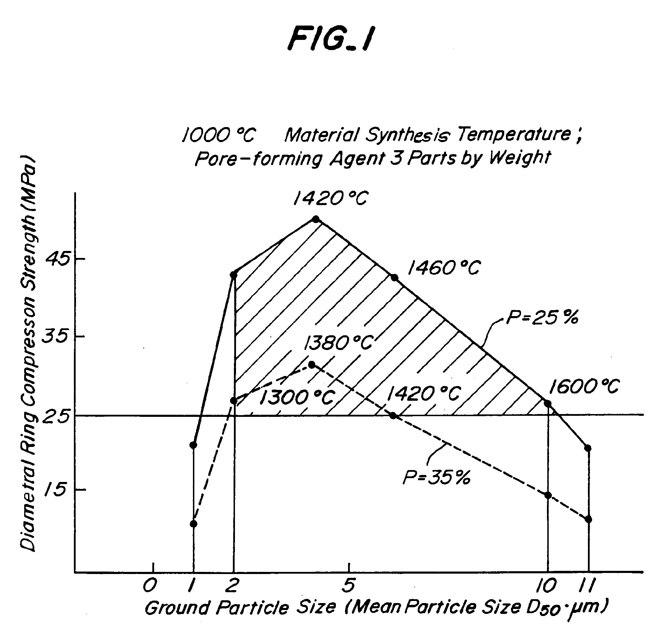

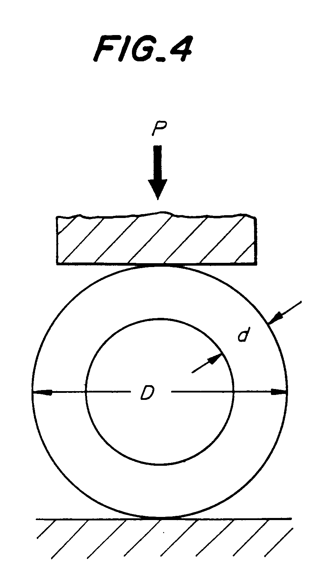

The powders of $La_2O_3$, $Mn_3O_4$ and $SrCO_3$ were mixed at a weight ratio of 61.7:32.1:6.2 in a ball mill, the mixture was dried and thereafter fired at 1000°C, and $La_{0.9}Sr_{0.1}MnO_3$ was synthesized. Thereafter, the synthesized compound of $La_{0.9}Sr_{0.1}MnO_3$ was ground in a ball mill to make a mean particle diameter 1 μm-11 μm. To 100 parts by weight of this powder were added 3 parts by weight of cellulose as a pore-forming agent and PVA as an organic binder, and the mixture was kneaded with 18 parts by weight of water, and formed by extrusion into a cylinder of 20 mm in outer diameter, 300 mm in length and 2 mm in thickness. Thereafter, this cylinder was subjected to a moisture-conditioning and dried, fired to make porosity of each porous ceramic tube 25% or 35% at each firing temperature as shown in Fig. 1, and a diametral ring compression strength (n=8) of each example was measured by a method shown in Fig. 4. The result is shown in Fig. 1.

In addition, in Fig. 4, P is the maximum load at breaking, D is the outer diameter of a test piece, and d is the thickness of a test piece. Moreover, the sample length is L. Diametral ring compression strength $\sigma_r$ is calculated from the following equation.

$$\sigma_r = \frac{P(D - d)}{Ld^2}$$

Here, the cylindrical air electrode should be highly permeable to oxygen. Therefore, the porosity P should be more than 25%. Moreover, this cylindrical air electrode functions as a support of the whole structure of SOFC, so that diametral ring compression strength should exceed 25 MPa which is target strength.

In Fig. 1, a sintering temperature of a molded tube varies and the diametral ring compression strength obtained varies in accordance with the particle diameter of a $La_{1-x}Sr_xMnO_3$ powder used in case of manufacturing a conductive porous ceramic tube by firing a molded tube. When manufacturing said porous ceramic tube by using $La_{1-x}Sr_xMnO_3$ powders having the same mean particle diameter, the more the molded tube is fired at high temperature, the more the porosity of said ceramic tube is lowered, and the strength is increased. Moreover, in case of manufacturing porous ceramic tubes having the same porosity, such as P=25%, the smaller the mean particle diameter of $La_{1-x}Sr_xMnO_3$ powder, the lower the sintering temperature. In order to manufacture a conductive porous ceramic tube having more than 25% porosity and diametral ring compression strength of more than 25 MPa, it is preferable to manufacture a porous ceramic tube under the condition within a range shown by oblique lines in Fig. 1.

### Example 2

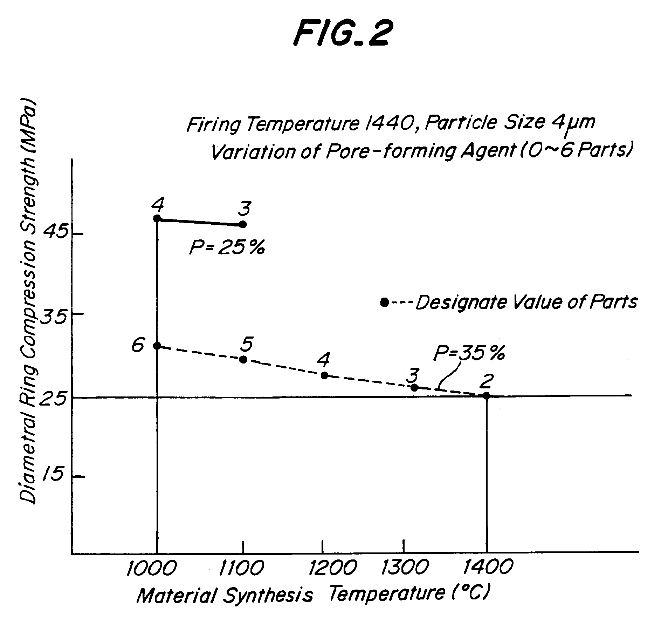

The powders $La_2O_3$, $Mn_3O_4$ and $SrCO_3$ were mixed at a weight ratio of 61.7:32.1:6.2 in a ball mill, the mixture was dried and thereafter fired at each material synthesizing temperature shown in Fig. 2, and $La_{0.9}Sr_{0.1}MnO_3$ was synthesized. Thereafter, the synthesized $La_{0.9}Sr_{0.1}MnO_3$ was ground in a ball mill to make a mean particle diameter 4 μm. To 100 parts by weight of this powder were added 0-5 parts by weight of a pore-forming agent and an organic binder, kneaded by adding 18 parts by weight of water, and formed by extrusion a cylinder of 20 mm in outer diameter, 300 m in length and 2 mm in thickness. Thereafter, this cylinder was subjected to moisture-conditioning and dried, then fired at a temperature of 1440°C. Moreover, the addition amount of a pore-forming agent was suitably set up for making porosities of each porous ceramic tube 25% or 35%, and diametral ring compression strength (n=8) of each example was measured. The result is shown in Fig. 2.

In Fig. 2, numerals on each line show addition amounts of a pore-forming agent. At a synthesizing temperature of not more than 1000°C, a material $La_{1-x}Sr_xMnO_3$ could not be synthesized. In order to manufacture a porous ceramic tube having more than 25% of porosity and more than 25 MPa of diametral ring compression strength, it is necessary to use a synthesizing temperature for $La_{1-x}Sr_xMnO_3$ of less than 1400°C.

### Example 3

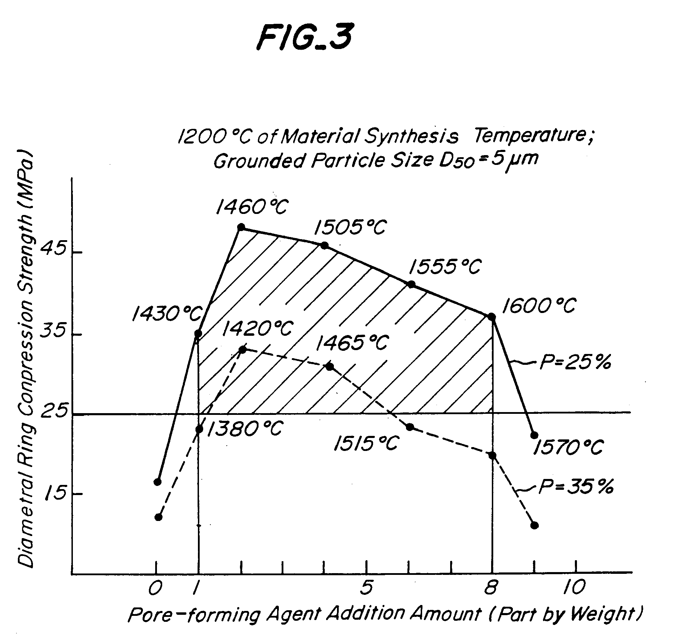

The powders of $La_2O_3$, $Mn_3O_4$ and $SrCO_3$ were mixed at a weight ratio of 61.7:32.1:6.2 in a ball mill, and this mixture was dried, thereafter fired at 1200°C and $La_{0.9}Sr_{0.1}MnO_3$ was synthesized. Thereafter, the synthesized $La_{0.9}Sr_{0.1}MnO_3$ was ground in a ball mill to make a mean particle diameter 5 μm. To 100 parts

by weight of the powder were added each addition amount of a pore-forming agent and an organic binder shown in Fig. 3, and the mixture was kneaded with 18 parts by weight of water, and formed by extrusion into a cylinder of 20 mm in outer diameter, 300 mm in length and 2 mm in thickness. Thereafter, this cylinder was given moisture conditioning and dried, fired to make the porosity of each substrate 25% or 35% by variously changing a firing temperature, and diametral ring compression strength (n=8) of each example was measured. The result is shown in Fig. 3.

In this embodiment, when an addition amount of the pore-forming agent is increased, it is necessary to raise the sintering temperature for maintaining the same porosity. Moreover, even if the addition amount of the pore-forming agent is the same, if the sintering temperature is raised, the porosity becomes small. Therefore, the porosity is regulated by the addition amount of the pore-forming agent and the sintering temperature.

As understood from Fig. 3, in order to make the porosity P more than 25% and the diametral ring compression strength more than 25 MPa, the addition amount of the pore-forming agent may preferably be 1-8 parts by weight. When the addition amount of the pore forming agent is 2-5 parts by weight, the porosity P can be 35% and the diametral ring compression strength more than 25 MPa, which is further advantageous.

## Claims

1. A method of manufacturing a conductive porous ceramic tube comprising the steps of mixing the powder of La or La compound, Mn or Mn compound and Sr or Sr compound; firing the resulting mixture at a temperature of not more than 1400°C to synthesize $La_{1-x}Sr_xMnO_3$ (where $0<x\leqq0.5$); grinding the $La_{1-x}Sr_xMnO_3$ to form a powder of 2 to 10 µm in mean particle diameter; kneading 100 parts by weight of the powder with an organic binder, water and 1 to 8 parts by weight of a pore-forming agent; forming the kneaded material into a molded tube; and drying this molded tube and thereafter firing the molded tube at a temperature of 1300-1600°C.

2. A method according to claim 1 wherein the synthesis of $La_{1-x}Sr_xMnO_3$ is at a temperature not less than 1000°C.

3. A porous support for an electrode and/or electrolyte in a solid oxide fuel cell, which support is a tube formed by the method of claim 1.

## Patentansprüche

1. Verfahren zur Herstellung einer leitenden porösen Keramikröhre, welches folgende Schritte umfaßt: das Mischen von Pulver aus La oder La-Verbindung, Mn oder Mn-Verbindung und Sr oder Sr-Verbindung; das Brennen der resultierenden Mischung bei einer Temperatur nicht über 1400°C, um $La_{1-x}Sr_xMnO_3$ (worin $0<x\leqq0,5$) zu synthetisieren; das Mahlen des $La_{1-x}Sr_xMnO_3$, um ein Pulver mit 2 bis 10 µm mittlerem Teilchendurchmesser zu bilden; das Kneten von 100 Gewichtsteilen des Pulvers mit einem organischen Bindemittel, Wasser und 1 bis 8 Gewichtsteilen eines porenbildenden Mittels; das Formen des gekneteten Materials zu einer geformten Röhre; und das Trocknen dieser geformten Röhre und daraufhin das Brennen der geformten Röhre bei einer Temperatur von 1300-1600°C.

2. Verfahren nach Anspruch 1, worin die Synthese von $La_{1-x}Sr_xMnO_3$ bei einer Temperatur nicht unter 1000°C erfolgt.

3. Poröser Träger für eine Elektrode und/oder einen Elektrolyten in einer festen Brennstoffzelle auf Oxid-Basis, welcher Träger eine nach dem Verfahren von Anspruch 1 gebildete Röhre ist.

## Revendications

1. Méthode de fabrication d'un tube en céramique poreuse conductrice comprenant les étapes de mélange de la poudre de La ou d'un composé de La, Mn ou d'un composé de Mn et de Sr ou d'un composé de Sr ; calcination du mélange résultant à une température non supérieure à 1400°C pour synthétiser $La_{1-x}Sr_xMnO_3$ (où $0<x\leqq0,5$) ; broyage du $La_{1-x}Sr_xMnO_3$ pour former une poudre de 1 à 10µm de diamètre de particule moyen ; pétrissage de 100 parties en poids de la poudre avec un liant organique, de l'eau et 1 à 8 parties en poids d'un agent de formation de pores; formation du matériau pétri en un tube moulé ; et séchage de ce tube moulé et après cela calcination du tube moulé à une température de 1300-1600°C.

2. Méthode selon la revendication 1, dans laquelle la synthèse de $La_{1-x}Sr_xMNO_3$ est à une température non inférieure à 1000°C.

3. Support poreux pour une électrode et/ou un électrolyte dans une cellule à fioul oxyde solide, lequel support est un tube formé par la méthode de la revendication 1.

# FIG.1

*1000 °C    Material Synthesis Temperature ;*
*Pore-forming Agent 3 Parts by Weight*

# FIG. 2

Firing Temperature 1440, Particle Size 4μm
Variation of Pore-forming Agent (0~6 Parts)

# FIG.3

1200 °C of Material Synthesis Temperature;
Grounded Particle Size $D_{50} = 5\,\mu m$

Diametral Ring Compression Strength (MPa)

Pore-forming Agent Addition Amount (Part by Weight)

# FIG.4